# FASCICULE DE BREVET EUROPEEN

(11) **EP 3 301 258 B1**
(45) Date de publication et mention de la délivrance du brevet: **25.10.2023**
(21) Numéro de dépôt: 17192907.8
(22) Date de dépôt: 25.09.2017
(51) Int. Cl.: F01D 5/06

(54) **DISQUE DE ROTOR ET ROTOR DE TURBOMACHINE COMPORTANT UN TEL DISQUE**
ROTORSCHEIBE UND ROTOR EINER TURBOMASCHINE, DER EINE SOLCHE SCHEIBE ENTHÄLT
ROTOR DISK AND ROTOR OF TURBOMACHINERY INCLUDING SUCH A DISK

(30) Priorité: 30.09.2016 FR 1659456
(43) Date de publication de la demande: 04.04.2018
(73) Titulaire: SAFRAN AIRCRAFT ENGINES, 75015 Paris (FR)
(72) Inventeur: POUZET, Emilie, 77550 MOISSY-CRAMAYEL (FR); PASQUIET, Didier, Désiré, René, 77550 MOISSY-CRAMAYEL (FR)
(74) Mandataire: Brevalex

(56) Documents cités:
- WO-A1-2012/056161
- RU-C1- 2 485 325
- US-A- 5 630 703

## Description

### DOMAINE TECHNIQUE

L'invention concerne un disque de rotor de turbomachine comportant un renfoncement conformé pour améliorer la répartition de contraintes dans la toile du disque.

L'invention concerne plus particulièrement un disque de rotor comportant une toile percée pour le passage de vis de fixation d'au moins une bride de solidarisation d'un autre disque avec ledit disque du rotor.

### ÉTAT DE LA TECHNIQUE ANTÉRIEURE

Une turbomachine d'aéronef, notamment la turbine basse pression de la turbomachine comporte une pluralité de disques de rotor s'étendant chacun globalement dans des plans radiaux par rapport à l'axe principal de la turbomachine et qui sont solidarisés l'un a l'autre.

Selon un mode de réalisation, la solidarisation des disques l'un avec l'autre s'effectue par boulonnage d'une bride annulaire provenant d'un disque de rotor sur la toile d'un autre disque du rotor.

La toile de l'autre disque comporte pour cela une pluralité d'orifices permettant le passage des vis pour le boulonnage.

Lors du fonctionnement de la turbomachine, des contraintes thermiques et centrifuges sont exercées sur la toile du disque et ces contraintes sont plus importantes au niveau des orifices formés dans la toile percée. Une conséquence de ces concentrations de contraintes localisées de la toile est une réduction importante de la durée de vie du rotor.

Afin d'améliorer la durée de vie du rotor, il a été proposé d'augmenter l'épaisseur de la toile autour des orifices. Un tel mode de réalisation augmente de la masse sur la toile, ce qui induit des contraintes élevées par l'action centrifuge et donc réduit l'efficacité de la solution.

Une autre proposition est de réaliser des orifices oblongs dans la toile, entre les orifices destinés à recevoir les vis de montage.

Ces orifices ont une influence sur la répartition des contraintes dans la toile mais ils ont aussi une influence négative sur les écoulements d'air de ventilation du rotor en permettant à l'air de circuler entre les cavités situées entre les toiles des différents disques.

Chacun des documents WO 2012/056161 A1 et RU 2 485 325 C1 montre un disque de rotor de turbomachine.

L'invention a pour but de proposer un rotor de turbomachine qui est réalisé d'une façon permettant la réduction des contraintes générées lors du fonctionnement de la turbomachine et qui sont causées par la présence des orifices dans la toile.

### EXPOSÉ DE L'INVENTION

L'invention propose un disque de rotor comme défini par la revendication indépendante 1 annexée.

La présence d'un tel renfoncement qui entoure en partie tous les orifices de la toile, permet de modifier la répartition de contraintes dans la toile par rapport à une toile présentant une section constante.

De préférence, le renfoncement est constitué d'une alternance de premières parties dont l'extrémité radiale externe de chaque première partie entoure en partie un orifice de la toile et de deuxièmes parties dont chacune est située entre deux premières parties adjacentes et entre deux orifices 28 adjacents.

De préférence, chaque deuxième partie comporte un bord radialement externe qui est décalé radialement vers l'extérieur par rapport à un bord radialement externe de chacune des deux premières parties qui lui sont associées.

De préférence, le bord radialement externe de chaque deuxième partie est décalé radialement vers l'extérieur par rapport aux orifices.

De préférence, chacune de la face amont et de la face aval de la toile comporte un renfoncement.

De préférence, la géométrie du renfoncement de la face amont est différente de la géométrie du renfoncement de la face aval.

De préférence, la géométrie du renfoncement de la face amont est identique à la géométrie du renfoncement de la face aval.

L'invention concerne aussi un rotor de turbomachine comportant un premier disque coaxial à l'axe principal du rotor, qui est réalisé selon l'invention, cf. la revendication indépendante 1 annexée, et un deuxième disque coaxial à l'axe principal du rotor, qui comporte une bride annulaire de fixation du deuxième disque au premier disque, la bride annulaire comportant une périphérie interne constituée d'une alternance de parties pleines et de parties creuses et comportant une face de contact située dans un plan radial par rapport à l'axe principal du rotor qui est située en vis-à-vis et est en contact avec une surface de contact de la toile du premier disque avec la bride du deuxième disque,
où
la géométrie de ladite surface de contact de la toile est complémentaire de la géométrie du renfoncement formé dans la face de la toile et est identique à la géométrie de la surface de montage de la bride.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en section selon un plan axial d'une partie de la turbine basse pression d'une turbomachine comportant au moins un disque de rotor réalisé selon l'invention ;
- la figure 2 est une représentation schématique en perspective avec arrachement et à plus grande échelle de deux disques de rotor représentés à la figure 1 montrant les toiles réalisées selon l'invention ;
- la figure 3 est une vue en perspective d'un disque de rotor représenté aux figures 1 et 2 dont la toile comporte un renfoncement selon l'invention ;
- la figure 4 est un détail à plus grande échelle de la toile du disque de rotor représenté à la figure 3, montrant la configuration du renfoncement selon l'invention.

### EXPOSÉ DÉTAILLÉ DE MODES DE RÉALISATION PARTICULIERS

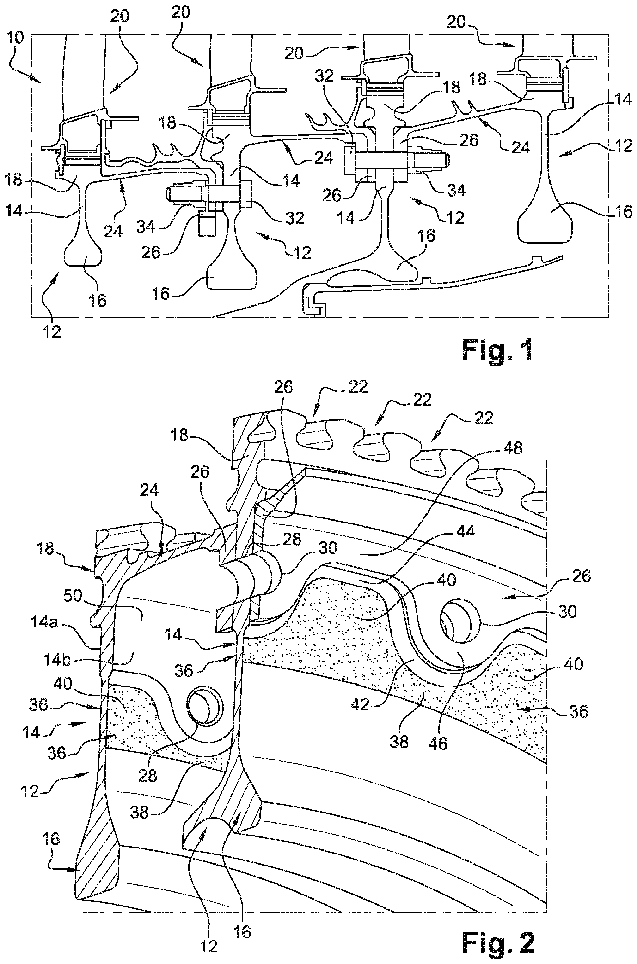

On a représenté à la figure 1 une partie d'une turbine 10 basse pression de turbomachine qui comporte notamment plusieurs disques 12 de rotor dont chacun correspond à un étage de la turbine 10.

Chaque disque 12 de rotor est coaxial à l'axe principal A de la turbomachine et il comporte une toile radiale annulaire 14, un moyeu 16 radialement central et situé à l'extrémité radiale interne de la toile 14 et une jante 18 située à l'extrémité radiale externe de la toile14.

La jante 18 est conformée pour supporter les aubes 20 de l'étage de la turbine 10, elle comporte à cet effet une pluralité de gorges 22 formées dans son bord périphérique, qui reçoivent des pieds des aubes 20.

Tous les disques 12 de la turbine 10 basse pression sont solidaires en rotation autour de l'axe principal de la turbomachine.

Pour cela, certains disques 12 comportent un flasque annulaire 24 qui s'étend axialement en direction d'un disque 12 adjacent. L'extrémité axiale libre du flasque 24 consiste en une bride annulaire 26 qui est fixée à la toile 14 du disque adjacent.

Selon le mode de réalisation représenté à la figure 1, en se référant à un ordre des disques allant de l'amont vers l'aval, suivant le sens d'écoulement des gaz dans la turbomachine, qui sera l'orientation axiale allant de la gauche vers la droite, le premier disque 12, c'est à dire celui qui est situé le plus à gauche, comporte un flasque 24 s'étendant axialement vers l'aval jusqu'au deuxième disque ; le deuxième disque 12 comporte un flasque 24 s'étendant axialement vers l'aval jusqu'au troisième disque 12 et le quatrième disque 12 comporte un flasque 24 s'étendant axialement vers l'amont jusqu'au troisième disque 12.

Le troisième disque 12 ne comporte pas de flasque 24 et reçoit deux brides situées axialement de part et d'autre de ce troisième disque 12.

Il sera compris que l'invention n'est pas limitée à cette répartition des flasques 24 et que toute variante tombant sous la portée de la revendication indépendante 1 peut être concernée par la présente invention.

Dans la description qui va suivre, on fera référence à l'un du deuxième ou du troisième disque 12, sur lequel la bride 26 d'un flasque 24 est montée.

La solidarisation de chaque bride 26 avec la toile 14 qui lui est associée est réalisée par boulonnage, c'est-à-dire une pluralité d'ensembles de vis 32 et d'écrous 34 qui serrent la ou les brides sur la toile 14. La toile 14 comporte à cet effet une pluralité d'orifices 28 traversant la toile 14 et qui sont disposés pour être alignés avec des orifices 30 associés formés dans les brides 26.

Dans le cas ici du troisième disque 12, sur lequel la bride 26 provenant du deuxième disque 12 et la bride 26 provenant du quatrième disque 12 sont fixées, chaque orifice 28 de la toile 14 est aligné avec un orifice 30 de la bride 26 provenant du deuxième disque 12 et avec un orifice 30 de la bride 26 provenant du quatrième disque 12.

Chaque bride 26 du premier, deuxième ou quatrième disque 12 est en contact avec une face amont 14a ou une face aval 14b de la toile 14 du deuxième ou du troisième disque 12.

Chacune des faces amont 14a ou aval 14b s'étend dans un plan radial par rapport à l'axe principal du disque, c'est-à-dire un plan perpendiculaire à l'axe principal du disque 12.

Chaque bride 26 comporte une face radiale qui vient en contact et est serrée contre la face amont ou aval 14a, 14b de la toile 14 par les boulons 32, 34.

Lors du fonctionnement de la turbomachine, la vitesse de rotation du rotor et la température élevée régnant dans la turbomachine créent des contraintes dans la toile 14 qui sont notamment concentrées au niveau des orifices 28.

Pour que la répartition des contraintes dans la toile 14 soit plus homogène, l'une et/ou l'autre de la face amont 14a et aval 14b de la toile 14 comporte un renfoncement 36 dont le fond est situé axialement en retrait par rapport au reste de ladite face amont 14a ou aval 14b.

Le renfoncement 36 est situé dans la partie radialement interne de la toile 14, c'est-à-dire qu'il s'étend radialement vers l'extérieur depuis le moyeu 16 et en direction de la jante 18, et plus particulièrement à partir d'un bord radialement interne de la toile 14, au niveau duquel dit bord, la toile 14 est reliée au moyeu 16.

Le renfoncement 36 est de forme générale globalement annulaire, c'est-à-dire qu'il s'étend tout autour de l'axe principal du disque 12.

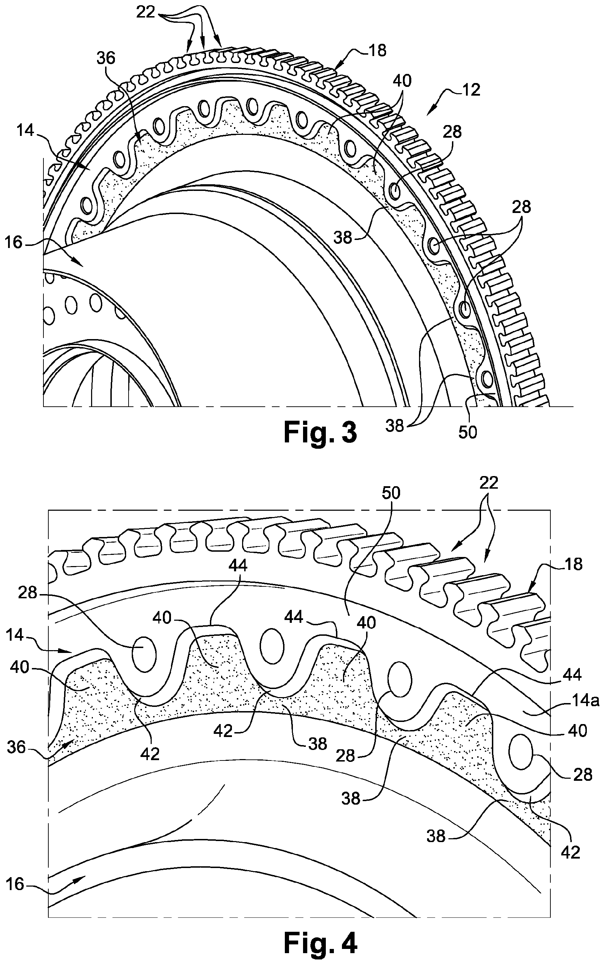

Le renfoncement 36 entoure en partie les orifices 28 de la toile, c'est-à-dire, comme on peut le voir aux figures 3 et 4, que le bord radialement externe du renfoncement 36 s'étend à distance des orifices 28 et il est situé, en partie, radialement en retrait vers l'intérieur par rapport aux orifices 28.

Le renfoncement 36 est constitué d'une alternance de premières parties 38 qui sont situées radialement en regard des orifices 28 de la toile 14 et de deuxièmes parties 40 situées entre deux premières parties 38 adjacentes et entre deux orifices 28 adjacents, de manière à former un renfoncement 36 présentant une surface unique.

Chaque première partie 38 du renfoncement 36 comporte un bord 42 d'extrémité radiale externe qui s'étend autour et à distance d'un orifice 28 de la toile 14.

Ici, comme on peut le voir plus en détail à la figure 4, le bord 42 externe de chaque première partie 38 forme un arc de cercle ouvert radialement vers l'extérieur et centré sur le centre de l'orifice 28 associé.

Chaque deuxième partie 40 du renfoncement 36 comporte un bord 44 d'extrémité radiale externe qui est décalé radialement vers l'extérieur par rapport au bord 42 externe de chaque première partie 38.

Le bord externe 44 de chaque deuxième partie 40 est rectiligne et orienté perpendiculairement à une direction radiale par rapport à l'axe principal du disque 12.

Selon un autre mode de réalisation, le bord externe 44 de chaque deuxième partie 40 est en forme d'arc de cercle centré sur l'axe principal du disque 12.

Le bord externe 44 de chaque deuxième partie 40 est décalé radialement vers l'extérieur par rapport aux orifices 28 de la toile 14.

Les positions radiales des bords externes 42, 44 des premières parties 38 et des deuxièmes parties 40 du renfoncement 36 sont déterminées de façon à réduire les contraintes internes dans la toile 14 au niveau de ses orifices 28.

Aussi, comme on peut le voir à la figure 2, le disque 12, qui est représenté au premier plan, peut recevoir une bride annulaire 26 qui est elle aussi conformée pour réduire les contraintes internes qu'elle subit, au niveau de ses propres orifices 30.

Selon ce mode de réalisation, la périphérie interne de la bride 26 est festonnée, c'est-à-dire qu'elle est constituée d'une alternance de parties pleines 46 et de parties creuses 48, les parties pleines 46 faisant saillie radialement vers l'intérieur par rapport au fond des parties creuses 48, en entourant les orifices 30 de la bride 26.

La bride 26 comporte une surface de contact située dans un plan radial par rapport à l'axe principal du disque 12, qui est située en vis-à-vis et qui vient en contact avec la face amont ou aval 14a, 14b de la toile 14.

La face amont 14a, ou la face aval 14b de la toile 14 comporte une surface 50 de contact avec la bride 26 associée qui est de géométrie complémentaire de la géométrie de la surface du renfoncement 36.

Selon un mode de réalisation préféré, la géométrie de cette surface de contact 50 est identique à la géométrie de la surface de contact de la bride 26.

Ainsi, lorsque la bride 26 est assemblée par boulonnage sur le disque 12, les deux surfaces de contact en vis-à-vis se recouvrent entièrement, ce qui réduit le matage des surfaces.

Comme on peut le voir à la figure 2, dans le cas du troisième disque 12, qui est représenté au premier plan, et sur lequel une bride 26 est montée sur chacune de la face amont 14a et de la face aval 14b de la toile 14, chacune de la face amont 14a et de la face aval 14b de la toile 14 comporte ainsi un renfoncement 36.

Selon le mode de réalisation représenté, les deux renfoncements 36 de cette toile 14 sont de géométries identiques.

Il sera compris que l'invention n'est pas limitée à ce mode de réalisation. Ainsi, selon un autre mode de réalisation, les renfoncements 36 des deux faces 14a, 14b de la toile 14 sont de géométries différentes, notamment en ce qui concerne l'étendue circonférentielle de chacune des parties 38, 40 du renfoncement 36 ou leur étendue radiale.

De manière similaire, les dimensions axiales, notamment la profondeur, du renfoncement 36, formé sur la face amont 14a ou sur la face aval 14b de la toile 14 d'un disque 12 peuvent être soit identiques, soit différentes des mêmes dimensions axiales du renfoncement 36 formé sur une face 14a, 14b de la toile 14 d'un autre disque 12.

Selon encore un autre aspect de l'invention, comme on peut le voir à la figure 2, en ce qui concerne le deuxième disque 12 qui est représenté au deuxième plan, seule la face amont 14a de la toile 14 est destinée à recevoir la bride 26 du premier disque 12 qui est représenté à la figure 1 uniquement. Selon cet autre aspect, les deux faces 14a, 14b de la toile 14 comportent un renfoncement 36, c'est-à-dire même la face aval 14b, sur laquelle aucune bride n'est montée.

## Revendications

1. Disque (12) de rotor (10) comportant, par rapport à l'axe principal du disque (12) une toile (14) radiale annulaire, un moyeu (16) radialement central situé à l'extrémité radiale interne de la toile (14) et une jante (18) située à l'extrémité radiale externe de la toile (14),
la toile (14) comportant une face amont (14a) et une face aval (14b), chacune des faces amont (14a) ou aval (14b) s'étendant dans un plan radial par rapport à l'axe principal du disque (12), et une pluralité d'orifices (28) de passage de boulons (32, 34) destinés à la fixation d'au moins une bride (26) annulaire appartenant à un autre disque (12) de rotor (10) adjacent sur l'une et/ou l'autre de la face amont (14a) ou de la face aval (14b) de la toile (14),
où
ladite face amont (14a) et/ou ladite face aval (14b) de la toile (14), comporte un renfoncement (36) de forme globalement annulaire qui s'étend tout autour de l'axe principal du disque (12), dont le fond est en retrait axialement vers l'intérieur de la toile (14) par rapport au reste de ladite face amont (14a) et/ou de ladite face aval (14b) et qui s'étend radialement vers l'extérieur, à partir du moyeu (16) du disque (12), vers la jante (18) et qui entoure, à distance, une partie radialement interne de chacun des orifices (28) de la toile (14).

2. Disque (12) de rotor (10) selon la revendication précédente, où
le renfoncement (36) est constitué d'une alternance de premières parties (38) dont l'extrémité radiale externe de chaque première partie (38) entoure en partie un orifice (28) de la toile (14) et de deuxièmes parties (40) dont chacune est située entre deux premières parties (38) adjacentes et entre deux orifices 28 adjacents.

3. Disque (12) de rotor (10) selon la revendication précédente, où chaque deuxième partie (40) comporte un bord radialement externe (44) qui est décalé radialement vers l'extérieur par rapport à un bord radialement externe (42) de chacune des deux premières parties (38) qui lui sont associées.

4. Disque (12) de rotor (10) selon la revendication 2 ou 3, où le bord radialement externe de chaque deuxième partie (40) est décalé radialement vers l'extérieur par rapport aux orifices (28).

5. Disque (12) de rotor (10) selon l'une quelconque des revendications précédentes, où
chacune de la face amont (14a) et de la face aval (14b) de la toile (14) comporte un renfoncement (36).

6. Disque (12) de rotor (10) selon la revendication précédente, où la géométrie du renfoncement (36) de la face amont (14a) est différente de la géométrie du renfoncement (36) de la face aval (14b).

7. Disque (12) de rotor (10) selon la revendication 5, où la géométrie du renfoncement (36) de la face amont (14a) est identique à la géométrie du renfoncement (36) de la face aval (14b).

8. Rotor (10) de turbomachine comportant un premier disque (12) coaxial à l'axe principal du rotor (10), qui est réalisé selon l'une quelconque des revendications précédentes, et un deuxième disque (12) coaxial à l'axe principal du rotor (10), qui comporte une bride (26) annulaire de fixation du deuxième disque (12) au premier disque (12),
la bride (26) annulaire comportant une périphérie interne constituée d'une alternance de parties pleines (46) et de parties creuses (48) et comportant une face de contact située dans un plan radial par rapport à l'axe principal du rotor (10) qui est située en vis-à-vis et est en contact avec une surface de contact (50) de la toile (14) du premier disque (12) avec la bride (26) du deuxième disque (12),
où
la géométrie de ladite surface de contact (50) de la toile (14) est complémentaire de la géométrie du renfoncement (36) formé dans la face de la toile (14) et est identique à la géométrie de la surface de montage de la bride (26).

## Patentansprüche

1. Scheibe (12) eines Rotors (10), die in Bezug auf die Hauptachse der Scheibe (12) ein ringförmiges radiales Blech (14), eine radial mittige Nabe (16), die sich am inneren radialen Ende des Bleches (14) befindet, und eine Felge (18) beinhaltet, die sich am äußeren radialen Ende des Bleches (14) befindet,
wobei das Blech (14) eine stromaufwärts gelegene Seite (14a) und eine stromabwärts gelegene Seite (14b) beinhaltet, wobei sich jede der stromaufwärts (14a) oder stromabwärts (14b) gelegenen Seiten in einer radialen Ebene in Bezug auf die Hauptachse der Scheibe (12) befindet, und eine Vielzahl von Durchgangsöffnungen (28) für Bolzen (32, 34), die zur Befestigung mindestens eines ringförmigen Flansches (26) bestimmt sind, der einer anderen Scheibe (12) eines benachbarten Rotors (10) auf der einen und/oder der anderen der stromaufwärts gelegenen Seite (14a) oder der stromabwärts gelegenen Seite (14b) des Bleches (14) angehört,
wobei die stromaufwärts gelegene Seite (14a) und/oder die stromabwärts gelegene Seite (14b) des Bleches (14) eine Vertiefung (36) in einer im Allgemeinen ringförmigen Form beinhaltet, die sich ringsum die Hauptachse der Scheibe (12) erstreckt, deren Boden in Bezug auf den Rest der stromaufwärts gelegenen Seite (14a) und/oder der stromabwärts gelegenen Seite (14b) axial nach innen in dem Blech (14) zurückgesetzt ist, und sich ausgehend von der Nabe (16) der Scheibe (12) radial nach außen zur Felge (18) erstreckt, und die im Abstand einen radial inneren Teil einer jeden der Öffnungen (28) des Bleches (14) umgibt.

2. Scheibe (12) eines Rotors (10) nach dem vorstehenden Anspruch, wobei die Vertiefung (36) aus einem Wechsel an ersten Teilen (38), von denen das äußere radiale Ende eines jeden Teils (38) teilweise eine Öffnung (28) des Bleches (14) umgibt, und an zweiten Teilen (40) besteht, von denen sich jedes zwischen zwei benachbarten ersten Teilen (38) und zwischen zwei benachbarten Öffnungen (28) befindet.

3. Scheibe (12) eines Rotors (10) nach dem vorstehenden Anspruch, wobei jeder zweite Teil (40) einen radial äußeren Rand (44) beinhaltet, der in Bezug auf einen radial äußeren Rand (42) eines jeden der beiden ersten Teile (38), die diesem zugeordnet sind, radial nach außen versetzt ist.

4. Scheibe (12) eines Rotors (10) nach Anspruch 2 oder 3, wobei der radial äußere Rand eines jeden zweiten Teils (40) in Bezug auf die Öffnungen (28) radial nach außen versetzt ist.

5. Scheibe (12) eines Rotors (10) nach einem der vorstehenden Ansprüche, wobei jede der stromaufwärts gelegenen Seite (14a) und der stromabwärts gelegenen Seite (14b) des Bleches (14) eine Vertiefung (36) beinhaltet.

6. Scheibe (12) eines Rotors (10) nach dem vorstehenden Anspruch, wobei sich die Geometrie der Vertiefung (36) der stromaufwärts gelegenen Seite (14a) von der Geometrie der Vertiefung (36) der stromabwärts gelegenen Seite (14b) unterscheidet.

7. Scheibe (12) eines Rotors (10) nach Anspruch 5, wobei die Geometrie der Vertiefung (36) der stromaufwärts gelegenen Seite (14a) gleich der Geometrie der Vertiefung (36) der stromabwärts gelegenen Seite (14b) ist.

8. Rotor (10) einer Turbomaschine, der eine erste zur Hauptachse des Rotors (10) koaxiale Scheibe (12) beinhaltet, die nach einem der vorstehenden Ansprüche ausgeführt ist, und eine zweite zur Hauptachse des Rotors (10) koaxiale Scheibe (12), die einen ringförmigen Flansch (26) zum Befestigen der zweiten Scheibe (12) an der ersten Scheibe (12) beinhaltet,
wobei der ringförmige Flansch (26) eine innere Peripherie beinhaltet, die aus einem Wechsel von vollen Teilen (46) und hohlen Teilen (48) besteht, und eine Kontaktseite beinhaltet, die sich in einer radialen Ebene in Bezug auf die Hauptachse des Rotors (10) befindet, der sich gegenüber befindet, und in Kontakt mit einer Kontaktoberfläche (50) des Bleches (14) der ersten Scheibe (12) mit dem Flansch (26) der zweiten Scheibe (12) ist,
wobei die Geometrie der Kontaktoberfläche (50) des Bleches (14) ergänzend zur Geometrie der Vertiefung (36) ist, die auf der Seite des Bleches (14) gebildet ist, und gleich der Geometrie der Montageoberfläche des Flansches (26) ist.

## Claims

1. Disk (12) of a rotor (10) comprising, relative to the principal axis of the disk (12), an annular radial web (14), a radially central hub (16) located at the inner radial end of the web (14) and a rim (18) located at the outer radial end of the web (14),
the web (14) comprising an upstream face (14a) and a downstream face (14b), each of the upstream face (14a) or downstream face (14b) extending in a radial plane relative to the main axis of the disk (12), and a plurality of orifices (28) through which bolts (32, 34) are to pass for the attachment of at least one annular flange (26) forming part of another adjacent rotor (10) disk (12) on either the upstream face (14a) or the downstream face (14b) of the web (14), or on both faces,
wherein said upstream face (14a) and/or said downstream face (14b) of the web (14) comprises a globally annular shaped indentation (36), the bottom of which is set back along the axial direction inwards into the web (14), relative to the remaining part of said upstream face (14a) and/or said downstream face (14b) and that extends radially outwards from the hub (16) of the disk (12) towards the rim (18), and that surrounds a radially inner part of each of the orifices (28) of the web(14), at a distance.

2. Disk (12) of a rotor (10) according to claim 1, wherein the indentation (36) is composed of an alternation of first parts (38) in which the outer radial end of each first part (38) partly surrounds an orifice (28) in the web (14), and second parts (40) each of which is located between two first adjacent parts (38) and between two adjacent orifices (28).

3. Disk (12) of a rotor (10) according to claim 2, wherein each second part (40) comprises a radially outer edge (44) that is offset radially outwards from a radially outer edge (42) of each of the first two parts (38) associated with it.

4. Disk (12) of a rotor (10) according to claim 2 or 3, wherein the radially outer edge of each second part (40) is offset radially outwards from the orifices (28).

5. Disk (12) of a rotor (10) according to claim 1, wherein each of the upstream face (14a) and the downstream face (14b) of the web (14) comprises an indentation (36).

6. Disk (12) of a rotor (10) according to claim 5, wherein the geometry of the indentation (36) in the upstream face (14a) is different from the geometry of the indentation (36) in the downstream face (14b).

7. Disk (12) of a rotor (10) according to claim 5, wherein the geometry of the indentation (36) in the upstream face (14a) is identical to the geometry of the indentation (36) in the downstream face (14b).

8. Turbomachine rotor (10) comprising a first disk (12) coaxial with the principal axis of the rotor (10) that is made according to one of the previous claims, and a second disk (12) coaxial with the principal axis of the rotor (10) that comprises an annular flange (26) for attachment of the second disk (12) to the first disk (12),
the annular flange (26) comprising an inner periphery composed of alternating solid parts (46) and hollow parts (48) and comprising a contact face locating in a radial plane relative to the principal axis of the rotor (10) that is located facing and in contact with a contact surface (50) of the web (14) of the first disk (12) with the flange (26) of the second disk (12),
wherein the geometry of said contact surface (50) of the web (14) is complementary to the geometry of the indentation (36) formed in the face of the web (14) and is identical to the geometry of the assembly surface of the flange (26).
